# EUROPÄISCHE PATENTSCHRIFT

(11) **EP 3 802 276 B1**
(45) Veröffentlichungstag und Bekanntmachung des Hinweises auf die Patenterteilung: **11.10.2023**
(21) Anmeldenummer: 19727632.2
(22) Anmeldetag: 27.05.2019
(51) Int. Cl.: B62D 1/184

(54) **LENKSÄULE FÜR EIN KRAFTFAHRZEUG**
STEERING COLUMN FOR A MOTOR VEHICLE
COLONNE DE DIRECTION POUR VÉHICULE AUTOMOBILE

(30) Priorität: 29.05.2018 DE 102018112837
(43) Veröffentlichungstag der Anmeldung: 14.04.2021
(73) Patentinhaber: thyssenkrupp Presta AG, 9492 Eschen (LI); thyssenkrupp AG, 45143 Essen (DE)
(72) Erfinder: NAGY, Balint Kalman, 9462 Montlingen (CH)
(74) Vertreter: thyssenkrupp Intellectual Property GmbH
(86) Internationale Anmeldenummer: PCT/EP2019/063607
(87) Internationale Veröffentlichungsnummer: WO 2019/228960

(56) Entgegenhaltungen:
- EP-A1- 2 923 921
- EP-A2- 3 048 031

## Beschreibung

Die Erfindung betrifft eine Lenksäule für ein Kraftfahrzeug. Eine Lenksäule gemäß dem Oberbegriff des Patentanspruchs 1 ist beispielsweise aus DE 10 2016 214 709 A1 bekannt.

Generell sind Lenksäulen für Kraftfahrzeuge bekannt, bei denen eine Lenkradposition an die Sitzposition des Fahrers eines Kraftfahrzeugs anpassbar ist. Die Lenksäule weist dazu eine Lenkspindel auf, an der ein Lenkrad befestigt ist. Die Lenksäule ist dabei im Wesentlichen derart verstellbar, dass das Lenkrad durch eine Längenverstellung in Längsrichtung der Lenksäule im Fahrzeuginnenraum positionierbar ist. Zur Fixierung der Lenkspindel mit dem Lenkrad an der gewünschten Position weist die Lenksäule eine Spanneinrichtung auf.

Eine Lenksäule mit einer Spanneinrichtung ist beispielsweise aus der eingangs genannten DE 10 2016 214 709 A1 bekannt. Die Lenksäule umfasst hierbei eine Manteleinheit und ein inneres Mantelrohr, in dem eine Lenkspindel drehbar gelagert ist. Das innere Mantelrohr ist in Richtung der Längsachse der Lenkspindel teleskopartig verstellbar und mittels einer lösbaren Spanneinrichtung in unterschiedlichen Lenkradpositionen feststellbar. Die Manteleinheit ist an der Karosserie des Kraftfahrzeugs gehaltert. Die Spanneinrichtung weist ein Eingriffsteil und ein Arretierteil auf. Das Eingriffsteil ist mit dem inneren Mantelrohr gekoppelt. Das Arretierteil ist in der Manteleinheit verschiebbar angeordnet. Das Arretierteil ist mit dem Eingriffsteil formschlüssig verbindbar. Ferner weist die Spanneinrichtung einen Nocken und einen Spannbolzen auf, der in der Manteleinheit drehbar gelagert ist. Die Nocke ist dabei mit dem Spannbolzen derart verbunden, dass dieser durch eine Rotationsbewegung mit dem Arretierteil zusammenwirkt.

Das Arretierteil wird durch die Drehbewegung der Nocke angehoben. Dies entspricht einer Freigabestellung zur Einstellung der Lenkradposition. In der Freigabestellung sind das Arretierteil und das Eingriffsteil voneinander entkoppelt. Zur Anhebung bzw. Absenkung des Arretierteils weist das Arretierteil eine Nockenbahn auf. Die Nocke wirkt dabei mit der Nockenbahn des Arretierteils zur Fixierung bzw. Lösung der Lenkspindel zusammen. Die Nockenbahn ist dabei an dem Arretierteil derart ausgebildet, dass ein Anheben des Arretierteils zur Verstellung der Lenkradposition unterstützt wird. Das Arretierteil weist des Weiteren eine horizontale Fläche auf, mit der die Nocke in der Freigabestellung in Kontakt steht.

Hierbei ist nachteilig, dass die Nocke und somit der Bedienhebel, der mit der Nocke drehfest verbunden ist, in der Freigabestellung lediglich kraftschlüssig mit dem Arretierteil verbunden ist. Die Fixierung bzw. das Halten des Bedienhebels in der Freigabestellung erfolgt hierbei rein kraftschlüssig. Der Bedienhebel ist hierbei nicht positionsfest fixiert. Ferner bewirkt die horizontale Fläche beim Überführen des Arretierelements in die Freigabestellung ein verschlechtertes Handhabungsgefühl des Bedienhebels. Ferner ist durch die horizontale Fläche das Arretierteil in der Freigabestellung bzw. der angehobenen Position nicht sicher fixiert.

Aus der EP 2 923 921 A1 oder der EP 3 048 031 A2 ist eine Lenksäule der eingangs genannten Art bekannt. Nachteilig daran ist, dass der Eingriff der Feststelleinrichtung bei der Handhabung des Bedienhebels beeinträchtigt sein kann.

Der Erfindung liegt daher die Aufgabe zu Grunde, eine Lenksäule für ein Kraftfahrzeug anzugeben, bei der durch eine verbesserte Feststelleinrichtung eine Längenverstellbarkeit der Lenksäule schnell und einfach mit einer verbesserten Handhabung des Bedienhebels realisierbar ist.

Erfindungsgemäß wird diese Aufgabe im Hinblick auf die Lenksäule durch den Gegenstand des Anspruchs 1 gelöst.

Die Erfindung beruht auf dem Gedanken, eine Lenksäule für ein Kraftfahrzeug anzugeben, umfassend
- eine Stelleinheit mit wenigstens einem Mantelrohr, in dem eine Lenkspindel um eine Längsachse des Mantelrohrs drehbar gelagert ist,
- eine Halteeinheit, die mit der Karosserie des Kraftfahrzeugs verbindbar ist und in der die Stelleinheit verschiebbar angeordnet ist,
- wenigstens eine Spanneinrichtung, durch die die Stelleinheit gegenüber der Halteeinheit festsetzbar ist. Die Spanneinheit umfasst wenigstens einen Spannhebel und wenigstens eine Spannwelle, die drehfest miteinander gekoppelt sind. Die Spannwelle weist wenigstens eine Nocke auf, die drehfest mit der Spannwelle verbunden ist.
- wenigstens eine Feststelleinrichtung, die wenigstens ein Arretierelement, das in der Halteeinheit angeordnet ist, und wenigstens ein Eingriffselement umfasst, das mit der Stelleinheit verbunden ist. Die Nocke korrespondiert dabei mit einer Kulissenbahn des Arretierelements derart, dass durch eine Drehbewegung der Nocke das Arretierelement mit dem Eingriffselement in Eingriff bringbar ist.

Die Kulissenbahn weist einen ersten Rampenbereich, einen zweiten Rampenbereich und einen dazwischenliegenden Übergangsbereich auf, von dem ausgehend die Rampenbereiche ausgebildet sind. Der erste Rampenbereich ist als ansteigende Rampe ausgebildet und der zweite Rampenbereich umfasst eine abfallende Rampe.

Erfindungsgemäß ist vorgesehen, dass das Arretierelement in einer Halteeinheit derart angeordnet ist, dass es in einer Höhenrichtung verschiebbar angeordnet ist, und in Richtung der Längsachse verschiebefest ist. In einer Fixierstellung ist das Arretierelement mit dem Eingriffselement verschiebefest gekoppelt. Das Arretierelement befindet sich in diesem Fall in einem abgesenkten Zustand, in dem das Arretierelement mit dem Eingriffselement kraftschlüssig und/oder formschlüssig verbunden ist. Durch eine Drehbewegung der Nocke ist das Arretierelement anhebbar. Das Arretierelement ist hierbei vom Eingriffselement entkoppelbar. Ist das Arretierelement angehoben, entspricht dies einer Lösestellung des Arretierelements. In der Lösestellung des Arretierelements ist die Stelleinheit gegenüber der Halteeinheit verschiebbar.

Bei der Überführung des Arretierelements von der Fixierstellung in die Lösestellung wirkt die Nocke mit der Kulissenbahn des Arretierelements zusammen. Insbesondere wirkt die Nocke mit einer Nockenkontur zur Überführung des Arretierelements von der Fixierstellung in die Lösestellung mit dem ersten Rampenbereich der Kulissenbahn zusammen. Die Nocke wirkt dabei mit dem ersten Rampenbereich der Kulissenbahn derart zusammen, dass das Arretierelement angehoben wird.

Die ansteigende Rampe des ersten Rampenbereichs wird als ansteigende Rampe bezeichnet, da durch diese Rampe das Arretierelement in Zusammenwirken mit der Nocke angehoben wird. Aus geometrischer Sicht ist die ansteigende Rampe vom Übergangsbereich ausgehend ebenso ansteigend ausgebildet.

Die abfallende Rampe wird als abfallende Rampe bezeichnet, da durch diese Rampe das Arretierelement in Zusammenwirken mit der Nocke abgesenkt wird. Hierbei ist aus geometrischer Sicht die abfallende Rampe vom Übergangsbereich ausgehend geometrisch ansteigend ausgebildet.

Die ansteigende Rampe des ersten Rampenbereichs und die abfallende Rampe des zweiten Rampenbereichs sind somit vom Übergangsbereich ausgehend geometrisch ansteigend ausgebildet.

Die Erfindung hat verschiedene Vorteile. Die ansteigende Rampe des ersten Rampenbereichs ist vom Übergangsbereich ausgehend ansteigend ausgebildet. Der erste Rampenbereich ermöglicht ein ruckfreies Lösen bzw. Anheben des Arretierelements mit einer im Wesentlichen gleichbleibenden Lösekraft. Ferner ist die abfallende Rampe des zweiten Rampenbereichs vom Übergangsbereich ausgehend geometrisch ansteigend ausgebildet. Mit anderen Worten ist die Steigung der ansteigenden Rampe des ersten Rampenbereichs der Steigung der abfallenden Rampe des zweiten Rampenbereichs entgegengesetzt, so dass der Wert der Steigung der ansteigenden Rampe ein entgegengesetztes Vorzeichen aufweist als der Wert der Steigung der abfallenden Rampe. Somit ist der Wert der einen Steigung ist Positiv und der Wert der anderen Steigung ist negativ. Die Begriffe "abfallend" und "ansteigend" sind also so zu verstehen, dass die Rampen Steigungen unterschiedliche Vorzeichen aufweisen. Der Übergangsbereich weist eine Stelle auf, in der die Steigung den Wert Null einnimmt und bildet somit einen Extrempunkt, in dem sich die Bewegungsrichtung des Arretierelements umkehrt und somit einen Totpunkt bildet. Die Werte der Steigung einer beispielsweise gewölbten Rampe lässt sich durch eine an einer jeweiligen Stelle der Rampe angelegte Tangente und der Ermittlung der Steigung der Tangente bestimmen oder durch eine mathematische Differenzierung einer Gleichung die die Kulissenbahn der Rampe bestimmt, wie dies dem Fachmann aus dem mathematischen Teilgebiet der Analysis bekannt ist.

Vorteilhaft unterstützt die abfallende Rampe ein Öffnen des Spannhebels. Der Übergangsbereich bildet hierbei einen Kraftwendepunkt, von dem ausgehend die Nocke lösekraftreduziert in die Lösestellung des Arretierelements überführbar ist.

Die Erfindung hat den weiteren Vorteil, dass durch die abfallende Rampe der Spannhebel und somit das Arretierelement in der Lösestellung fixiert sind.

Die abfallende Rampe ermöglicht somit eine verbesserte Fixierung des Spannhebels sowie des Arretierelements in der Lösestellung. Des Weiteren ist das Arretierelement schnell und einfach von der Fixierstellung in die Lösestellung sowie von der Lösestellung in die Fixierstellung überführbar. Ferner ist vorteilhaft, dass beim Anheben des Arretierelements eine Handhabung des Spannhebels durch die abfallende Rampe verbessert wird.

Bevorzugte Ausführungsformen der Erfindung sind in den Unteransprüchen angegeben.

Bei einer besonders bevorzugten Ausführungsform weisen die ansteigende Rampe und die abfallende Rampe einen Winkel β zueinander auf, der kleiner als 150° ist.

Vorzugsweise weisen somit der erste Rampenbereich und der zweite Rampenbereich einen Winkel β zueinander auf, der kleiner als 150° ist. Die ansteigende Rampe des ersten Rampenbereichs und die abfallende Rampe des zweiten Rampenbereichs sind vom Übergangsbereich ausgehend in einem Winkel β zueinander ausgebildet. Vorzugsweise liegt der Winkel β zwischen der ansteigenden Rampe und der abfallenden Rampe 80° bis 140°. Mit anderen Worten weisen der erste Rampenbereich und der zweite Rampenbereich vorzugsweise einen Winkel β zueinander auf, der zwischen 80° und 140° liegt.

Die ansteigende Rampe kann eine größere Steigung aufweisen, als die abfallende Rampe. Als Steigung wird hier ein Steigungswinkel von einer horizontalen Referenzebene verstanden, die am Übergangsbereich tangential anliegt. Der Steigungswinkel wird hierbei zwischen der ansteigenden Rampe und der Referenzebene gemessen. Des Weiteren wird der Steigungswinkel der zweiten abfallenden Rampe ebenso zwischen dieser und der Referenzebene gemessen. Mit anderen Worten kann der Betrag des Werts der Steigung der ansteigenden Rampe größer als der Betrag des Werts der Steigung der abfallenden Rampe sein.

Der Steigungswinkel der ansteigenden Rampe des ersten Rampenbereichs bezogen auf die Referenzebene kann somit größer sein, als der Steigungswinkel der abfallenden Rampe des zweiten Rampenbereichs bezogen auf die Referenzebene. Ebenso kann auch der Steigungswinkel der ansteigenden Rampe des ersten Rampenbereichs bezogen auf die Referenzebene kleiner sein, als der Steigungswinkel der abfallenden Rampe des zweiten Rampenbereichs bezogen auf die Referenzebene. Hierbei ist vorteilhaft, dass durch den Winkel β, der kleiner als 150° ist, ein Anheben bzw. Lösen des Arretierelements vom Eingriffselement erleichtert wird. Ferner ist vorteilhaft, dass das Arretierelement und somit der Spannhebel in der Lösestellung verbessert fixierbar ist.

Bei einer weiteren bevorzugten Ausführungsform weist der zweite Rampenbereich eine zweite ansteigende Rampe auf. Die zweite ansteigende Rampe wird dabei als ansteigende Rampe bezeichnet, da durch diese Rampe das Arretierelement in Zusammenwirken mit der Nocke gering angehoben werden kann. Aus geometrischer Sicht ist die zweite ansteigende Rampe ebenso am Arretierelement geometrisch ansteigend ausgebildet. Die abfallende Rampe und die zweite ansteigende Rampe des zweiten Rampenbereichs sind an einem freien Ende des Arretierelements angeordnet. Die abfallende Rampe ist dabei vom Übergangsbereich ausgehend geometrisch ansteigend ausgebildet. Die abfallende Rampe des zweiten Rampenbereichs ist am Arretierelement derart ausgebildet, dass die zweite ansteigende Rampe mit der abfallenden Rampe am freien Ende des Arretierelements eine Materialeinwölbung bilden. Die zweite ansteigende Rampe ermöglicht vorteilhafterweise ein verbessertes Fixieren der Nocke in der Lösestellung des Arretierelements. Der Spannhebel wird dadurch positionsfest in der Lösestellung gehalten.

In der nachfolgenden Beschreibung wird die ansteigende Rampe des ersten Rampenbereichs als erste ansteigende Rampe bezeichnet. Folglich entspricht die erste ansteigende Rampe der ansteigenden Rampe des ersten Rampenbereichs.

Vorzugsweise ist ein Federelement vorgesehen, das das Arretierelement vorspannt. Das Federelement kann an der Halteeinheit angeordnet sein. Das Federelement kann am Halteelement derart angeordnet sein, dass das Federelement mit der Halteeinheit mit einem freien Ende fest verbunden ist. Die feste Verbindung des Federelements mit der Halteeinheit kann formschlüssig und/oder kraftschlüssig und/oder stoffschlüssig ausgebildet sein. Das Federelement kann durch eine Federzunge gebildet sein. Das Federelement kann durch einen Federstab gebildet sein. Ferner kann das Federelement durch eine Blattfeder gebildet sein. Die Feder kann auch durch eine Spiral- oder eine Tellerfeder gebildet sein. Das Federelement kann des Weiteren durch eine nicht genannte Federart gebildet sein. Das Federelement kann eine Positiv-Lock-Feder bilden, so dass das Arretierelement in Eingriffsrichtung vorgespannt ist und ein sicherer Eingriff mit dem Eingriffselement bewirkt wird.

Vorzugsweise greift das Federelement zur Vorspannung des Arretierelements am Arretierelement an. Ferner kann das Federelement zur Vorspannung des Arretierelements am Arretierelement anliegen. Durch das Federelement wird das Arretierelement gegen das Eingriffselement vorgespannt. Das Federelement bewirkt somit eine Vorspannung des Arretierelements in Richtung des Eingriffselements. Dadurch wird vorteilhafterweise ein sicheres Eingreifen des Arretierelements in das Eingriffselement ermöglicht. Mit anderen Worten ist durch das Federelement das Arretierelement in die Fixierstellung überführbar. Das Federelement spannt das Arretierelement derart vor, dass ein sicheres Schließen des Spannhebels und somit ein sicheres Überführen des Arretierelements in die Fixierstellung erreicht wird. Bei einer Crash-Situation ist hierbei vorteilhaft, dass das Arretierelement durch das Federelement sicher und schnell in das Eingriffselement einrastet bei einer Zahn-auf-Zahn Situation bzw. im Eingriffselement eingerastet bleibt. Unter der Zahn-auf-Zahn Situation ist zu verstehen, dass die Zahnköpfe des Arretierelements auf den Zahnköpfen des Eingriffselements aufliegen und die Zähne noch nicht vollständig in Eingriff sind. Bei einer minimalen Verschiebung im Crashfall des Eingriffselements gegenüber des Arretierelements erfolgt dank des Federelements der Eingriff des Arretierelements in das Eingriffselement.

Weiter vorzugsweise weist das Arretierelement einen Materialvorsprung auf, an dem das Federelement angreift. Das Federelement kann an dem Materialvorsprung derart angreifen, dass das Arretierelement gegen das Eingriffselement vorgespannt wird. Der Materialvorsprung kann dabei durch eine Materialauswölbung des Arretierelements gebildet sein. Der Materialvorsprung kann auch durch eine Materialkante des Arretierelements gebildet sein. Der Materialvorsprung kann mit dem Arretierelement integral ausgebildet sein. Ferner kann der Materialvorsprung durch ein separates Vorspannelement gebildet sein. Das Vorspannelement kann dabei durch eine Schraube gebildet sein. Des Weiteren kann das Vorspannelement durch einen Stift oder einen Bolzen gebildet sein. Das Vorspannelement kann in das Arretierelement zumindest teilweise eingebettet sein. Der Materialvorsprung ist vorzugsweise auf einer Materialstufe des Arretierelements angeordnet. Der Materialvorsprung kann dabei zentral am Arretierelement angeordnet sein. Der Materialvorsprung ist derart ausgebildet, dass eine verbesserte Federkrafteinleitung in das Arretierelement zur Vorspannung gegen das Eingriffselement ermöglicht wird. Vorteilhafterweise wird dadurch eine verschiebefeste Kopplung des Arretierelements mit dem Eingriffselement sichergestellt. Das Arretierelement ist somit in der Fixierstellung mit dem Eingriffselement fest verbindbar.

Bei einer bevorzugten Ausführungsform ist der Materialvorsprung derart ausgebildet, dass das Federelement in Punktkontakt und/oder in Linienkontakt mit dem Arretierelement steht. Hierbei ist vorteilhaft, dass eine verbesserte Federkrafteinleitung des Federelements in das Arretierelement zur Vorspannung gegen das Eingriffselement ermöglicht wird. Dadurch wird eine verbesserte Fixierung des Arretierelements in der Fixierstellung erreicht, wodurch der Spannhebel in der Fixierstellung des Arretierelements bzw. in der Schließstellung des Spannhebels positionsfest gehalten wird.

Bei einer bevorzugten Ausführungsform weist das Arretierelement wenigstens ein erstes Formschlussmittel und das Eingriffselement wenigstens ein zweites Formschlussmittel auf. Die Formschlussmittel sind durch eine Hubbewegung des Arretierelements in gegenseitigen Eingriff bringbar. Das erste Formschlussmittel des Arretierelements kann hierbei durch eine Verzahnung gebildet sein. Das zweite Formschlussmittel des Eingriffselements kann ebenso durch eine Verzahnung gebildet sein. Ferner können die Formschlussmittel des Arretierelements und des Eingriffselements des Weiteren eine andere nicht genannte Form aufweisen. Das erste Formschlussmittel und das zweite Formschlussmittel können komplementär zueinander ausgebildet sein. Das erste Formschlussmittel des Arretierelements und das zweite Formschlussmittel des Eingriffselements sind derart ausgebildet, dass das Arretierelement mit dem Eingriffselement formschlüssig verbindbar ist. Bei einer formschlüssigen Verbindung des Arretierelements mit dem Eingriffselement befindet sich das Arretierelement in der Fixierstellung, in der keine Längenverstellung der Lenksäule im Normalbetrieb möglich ist. In der Lösestellung des Arretierelements sind das erste Formschlussmittel des Arretierelements und das zweite Formschlussmittel des Eingriffselements in außer Eingriff gebracht. Mit anderen Worten ist in der Lösestellung das Arretierelement vom Eingriffselement formschlussentkoppelt. Das Arretierelement kann durch das erste Formschlussmittel mit dem zweiten Formschlussmittel des Eingriffselements kraftschlüssig und/oder formschlüssig verbindbar sein. Die Formschlussmittel bilden vorteilhaft eine konstruktiv einfache Lösung zur Verbindung des Arretierelements mit dem Eingriffselement.

Vorzugsweise ist das Arretierelement mit dem Eingriffselement kraftschlüssig und formschlüssig lösbar verbindbar. Hierbei ist vorteilhaft, dass die kraftschlüssige und formschlüssige Verbindung ein unzulässiges Abheben des Arretierelements vom Eingriffselement im gekoppelten Zustand verhindert.

Bei einer besonders bevorzugten Ausführungsform weist die Nocke eine erste Nockenkontur und eine zweite Nockenkontur auf, die mit dem ersten Rampenbereich zur sicheren Entkoppeln des Arretierelements vom Eingriffselement zusammenwirkt. Vorzugsweise ist die erste Nockenkontur an der Nocke derart ausgebildet, dass die erste Nockenkontur tangential an einem Umfang der Nocke anschließt. Die zweite Nockenkontur kann dabei derart ausgebildet sein, dass die zweite Nockenkontur mit dem ersten Rampenbereich des Arretierelements in Kontakt, insbesondere in Linienkontakt bringbar ist. Die zweite Nockenkontur kann an der Nocke derart ausgebildet sein, dass die zweite Nockenkontur eine Materialeinschnürung an der Nocke bildet. Die Nocke kann asymmetrisch ausgebildet sein. Die Nocke kann auch eine symmetrische Nockenform aufweisen. Durch die zweite Nockenkontur ist bei einer Entkopplung des Arretierelements vom Eingriffselement eine Lösekraft in das Arretierelement verbessert einleitbar. Dadurch wird ein Anheben bzw. ein Entkoppeln des Arretierelements vom Eingriffselement erleichtert. Ein schnelles und sicheres Überführen des Arretierelements von der Fixierstellung in die Lösestellung wird somit ermöglicht.

Bei einer Ausführungsform ist das Eingriffselement unter Zwischenschaltung einer Energieabsorptionseinrichtung mit der Stelleinheit verbunden. Das Eingriffselement kann mit der Energieabsorptionseinrichtung derart verbunden sein, dass in einer Crash-Situation eine kinetische Energie durch den Aufprall eines Fahrzeuginsassen auf das Lenkrad durch die Energieabsorptionseinrichtung aufgenommen wird. Hierbei ist vorteilhaft, dass ein Verletzungsrisiko des Fahrzeuginsassen durch die Energieabsorptionseinrichtung reduziert wird. Die Energieabsorptionseinrichtung umfasst bevorzugt ein Energieabsorptionselement, welches im Crashfall plastisch deformierbar ist. Weiters kann die Energieabsorptionseinrichtung ein Losbrechelement, beispielsweise einen Scherstift oder einen Scherniet aufweisen, der das Eingriffselement und die Stelleinheit im Normalbetrieb miteinander verbindet und in der Crash-Situation durch einen ersten Impuls, der durch den Fahrzeuginsassen in das Lenkrad eingetragen wird, zerbricht und somit die Bewegung zwischen Stelleinheit und Eingriffselement unter der Deformation des Energieabsorptionselements ermöglicht.

Die Erfindung wird nachstehend mit weiteren Einzelheiten unter Bezug auf die beigefügten Zeichnungen näher erläutert. Die dargestellten Ausführungsformen stellen Beispiele dar, wie die erfindungsgemäße Lenksäule ausgestaltet sein kann.

In diesen zeigen
- Figur 1: eine perspektivische Ansicht einer Lenksäule mit einem Halteelement nach einem bevorzugten erfindungsgemäßen Ausführungsbeispiel;
- Figur 2: eine perspektivische Ansicht der Lenksäule gemäß Figur 1 ohne das Halteelement;
- Figur 3: eine perspektivische Ansicht einer Stelleinheit, einer Spanneinrichtung und einer Feststelleinrichtung der Lenksäule gemäß Figur 1;
- Figur 4: eine perspektivische Explosionsansicht der Stelleinheit und einer Energieabsorptionseinrichtung der Lenksäule gemäß Figur 1;
- Figur 5: eine Seitenansicht der Lenksäule gemäß Figur 1 mit der Spanneinrichtung und der Feststelleinrichtung in einer Fixierstellung des Arretierelements;
- Figur 6: eine Detailansicht der Fixierstellung des Arretierelements gemäß Figur 5;
- Figur 7: eine Seitenansicht der Lenksäule gemäß Figur 1, bei der Überführung des Arretierelements von der Fixierstellung in eine Lösestellung;
- Figur 8: eine Seitenansicht der Lenksäule gemäß Figur 1 mit der Spanneinrichtung und der Feststelleinrichtung in der Lösestellung des Arretierelements, und
- Figur 9: eine Seitenansicht des Arretierelements, einer Nocke und eines Federelements für die Lenksäule gemäß Figur 1, nach einem weiteren bevorzugten erfindungsgemäßen Ausführungsbeispiel.

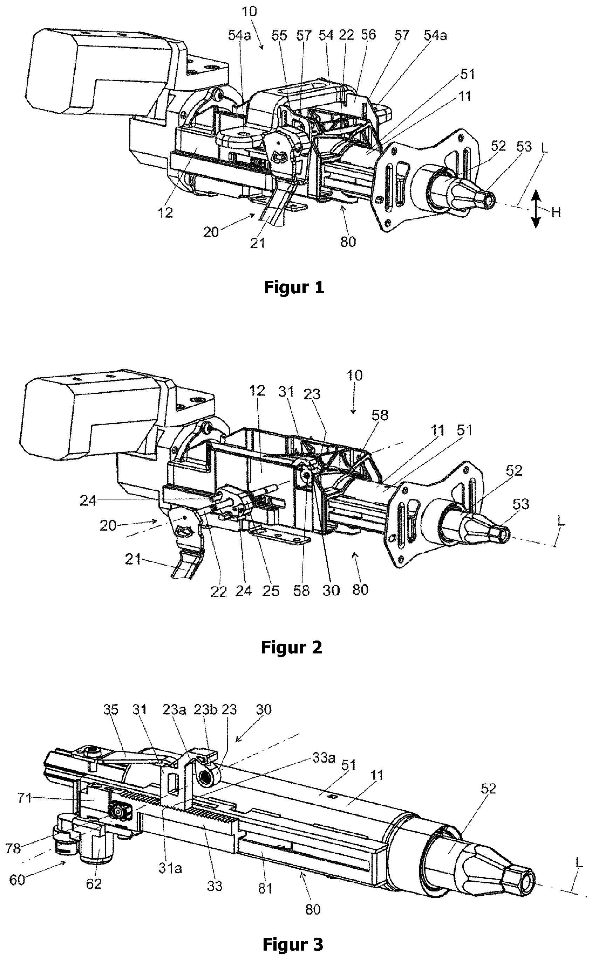

Figur 1 zeigt eine perspektivische Ansicht einer Lenksäule 10 nach einem erfindungsgemäßen Ausführungsbeispiel. Die Lenksäule 10 umfasst eine Stelleinheit 11, eine Halteeinheit 12 und eine Spanneinrichtung 20. Die Lenksäule 10 ist durch die Halteeinheit 12 an einer Karosserie eines nicht dargestellten Kraftfahrzeugs befestigbar. Die Halteeinheit 12 weist ein Halteelement 54 in Form einer Konsole auf, durch die die Lenksäule 10 mit der Karosserie des Kraftfahrzeugs verbindbar ist. Das Halteelement 54 umfasst zur Verbindung mit der Karosserie Befestigungsmittel 54a. Das Halteelement 54 weist des Weiteren Seitenwangen 55, 56 auf, die zueinander beabstandet sind. Die Seitenwangen 55, 56 sind dabei derart zueinander angeordnet, dass die Halteeinheit 12 zwischen den Seitenwangen 55, 56 aufnehmbar ist. Die Stelleinheit 11 ist in der Halteeinheit 12 angeordnet.

Die Stelleinheit 11 umfasst eine Lenkspindel 52 und ein Mantelrohr 51. Die Lenkspindel 52 und das Mantelrohr 51 weisen eine gemeinsame Längsachse L auf. Die Lenkspindel 52 ist dabei im Mantelrohr 51 um die Längsachse L drehbar gelagert angeordnet. Die Lenkspindel 52 weist ein hinteres Ende 53 auf, an dem ein nicht dargestelltes Lenkrad auf der Lenkspindel 52 anbringbar ist. Das Mantelrohr 51 ist in einer Aufnahme der Halteeinheit 12 gehaltert.

Die Spanneinrichtung 20 ist durch manuelle Betätigung eines Spannhebels 21 in eine Feststellposition oder in eine Freigabeposition bringbar. Dabei ist in der Freigabeposition das Mantelrohr 51 zur Längenverstellung in Richtung der Längsachse L innerhalb der Halteeinheit 12 teleskopartig verschiebbar. Ferner ist die Halteeinheit 12 in einer Höhenrichtung H relativ zum Halteelement 54 gemäß den Pfeilrichtungen, wie in Figur 1 gezeigt, höhenverstellbar, in dem die Halteeinheit 12 um eine Schwenkachse verschwenkbar ist. In der Feststellposition ist das Mantelrohr 51 in Richtung der Längsachse L und die Halteeinheit 12 in der Höhenrichtung H fixiert. Die Feststellposition entspricht dem Normalbetrieb der Lenksäule 10. Im Normalbetrieb ist sichergestellt, dass bei den üblicherweise über das Lenkrad auf die Lenkspindel 52 einwirkenden Kräfte die eingestellte Lenkradposition nicht veränderbar ist.

Wie in Figur 2 gezeigt, weist die Spanneinrichtung 20 einen Spannhebel 21, eine Spannwelle 22 und einen Nocken 23 auf. Der Spannhebel 21 ist mit der Spannwelle 22 drehfest verbunden. Die Spannwelle 22 ist quer zur Längsachse L durch Langlöcher 57 in den einander gegenüberliegenden Seitenwangen 55, 56 und durch eine Durchgangsöffnung der Halteeinheit 12 hindurchgeführt. Die Spanneinrichtung 20 umfasst hierbei eine im Allgemeinen bekannte Spannmechanik mit einer Kippstiftanordnung 24 und einer Stützscheibe 25.

Die Kippstiftanordnung 24 ist mit der Spannwelle 22 drehfest verbunden. Ferner ist die Stützscheibe 25 der Kippstiftanordnung 24 gegenüberliegend drehfest mit der Seitenwange 55 verbunden. Durch eine Drehung des Spannhebels 21 und der damit verbundenen Spannwelle 22 wird die Stützscheibe 25 relativ zu dem Spannhebel 21 und der Spannwelle 22 axial verlagert. Die Stützscheibe 25 wird dadurch von außen gegen die Seitenwange 55 angepresst. Die Spannwelle 22 ist an der gegenüber angeordneten Seitenwange 56 axial verschiebefest gelagert, beispielsweise durch eine als Widerlager wirkende Sechskantmutter, die ein Innengewinde aufweist und auf ein Außengewinde der Spannwelle 22 aufgeschraubt ist. Werden daher die beiden Seitenwangen 55, 56 gegeneinander bewegt, wird die dazwischen angeordnete Halteeinheit 12 kraftschlüssig festgeklemmt. Anstelle der gezeigte Kippstiftanordnung 24, 25 können auch andere Mechanismen zur Umsetzung der Drehbewegung in eine Klemmbewegung zum Einsatz kommen, wie beispielsweise ein Keilscheibe-Nockenscheibe-Klemmvorrichtung.

Die Spannwelle 22 ist durch quer zur Längsachse L einander gegenüber angeordnete Öffnungen 58 in der Halteeinheit 12 hindurchgeführt. Die Halteeinheit 12 ist ähnlich einer Spannhülse oder einer Schelle zwischen den Öffnungen 58 in Längsrichtung geschlitzt ausgebildet. Dadurch wird bei der beschriebenen Verspannung der Seitenwangen 55, 56 durch die Klemmkraft die Halteeinheit 12 quer zur Längsachse L zusammengepresst. Hierbei ist die Feststellposition eingestellt, wobei das Mantelrohr 51 kraftschlüssig in der Halteeinheit 12 festgeklemmt ist. Die Halteeinheit 12 weist einen Schlitz in Richtung der Längsachse L auf, der im Bereich der Spannwelle 22 ausgebildet ist. Der Schlitz weist in der Feststellposition eine verringerte Breite aufgrund der wirkenden Klemmkraft im Vergleich zur Freigabeposition auf. Durch diese verringerte Breite wird das Mantelrohr 51 in der Halteeinheit 12 festgeklemmt ist. Die Verschmälerung des Schlitzes der Halteeinheit 12 geht mit einer Reduzierung des Innendurchmessers der Bohrung der Halteeinheit 12 einher, in dem die Stelleinheit 11 aufgenommen ist.

Gemäß Figur 3 ist eine perspektivische Ansicht einer Stelleinheit 11, wie vorstehend beschrieben gezeigt. Ferner zeigt Figur 3 eine Feststelleinrichtung 30, eine Koppelvorrichtung 60 und eine Energieabsorptionseinrichtung 80.

Die Feststelleinrichtung 30 weist ein Arretierelement 31 und ein Eingriffselement 33 auf. Das Arretierelement 31 ist in Richtung der Längsachse L in der Halteeinheit 12 verschiebefest gelagert. In der Höhenrichtung H ist das Arretierelement 31 zur Einstellung der Feststellposition oder der Freigabeposition des Spannhebels 21 höhenverstellbar gelagert. Mit anderen Worten ist das Arretierelement 31 in der Halteeinheit 12 derart angeordnet, dass das Arretierelement 31 in der Halteeinheit 12 in der Höhenrichtung H verschiebbar ist. Das Eingriffselement 33 ist über eine Energieabsorptionseinrichtung 80 mit dem Mantelrohr 51 verbunden. Das Arretierelement 31 und das Eingriffselement 33 weisen Formschlussmittel 31a, 33a auf. Die Formschlussmittel 31a, 33a sind durch eine Hubbewegung des Arretierelements 31 formschlüssig in Eingriff bringbar. Auf die Ausführung des Arrtierelements 31, des Eingriffselements 33 sowie der Formschlussmittel 31a, 33a wird später näher eingegangen.

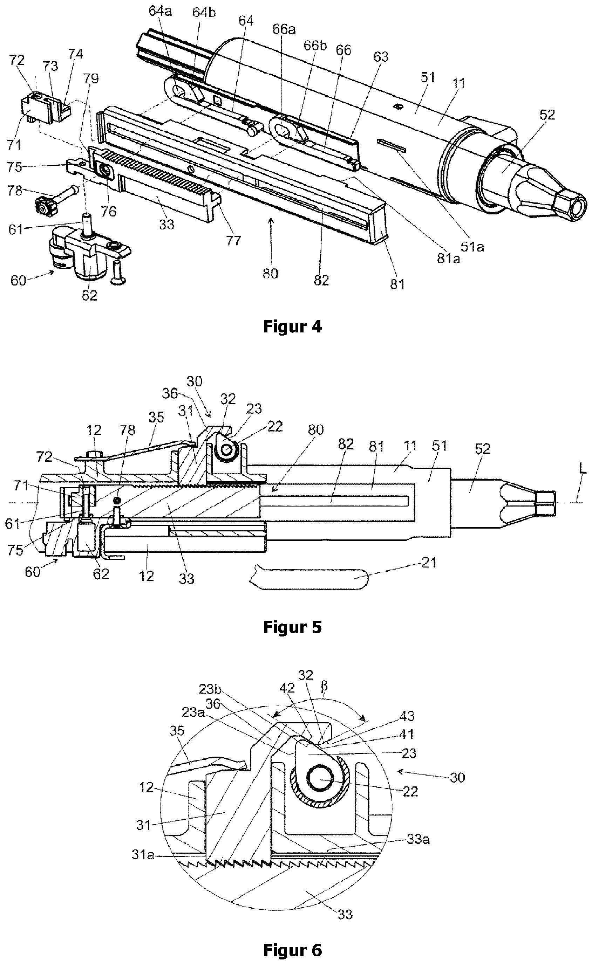

Die Halteeinheit 12 weist des Weiteren ein Federelement 35 zur Vorspannung des Arretierelements 31 auf. Das Arretierelement 31 wird dabei durch das Federelement 35 gegen das Eingriffselement 33 gepresst. Durch das Federelement 35 sind die Formschlussmittel 31a, 33a des Arretierelements 31 und des Eingriffselements 33 formschlüssig in Eingriff haltbar. Die Feststellposition der Spanneinrichtung 20 entspricht hierbei einer Fixierstellung des Arretierelements 31. In der Fixierstellung des Arretierelements 31 ist das Arretierelement 31 mit dem Eingriffselement 33 in Richtung der Längsachse L verschiebefest, insbesondere formschlüssig verbunden. In der Freigabeposition der Spanneinrichtung 20 ist das Arretierelement 31 vom Eingriffselement 33 entkoppelt. Dies entspricht der Lösestellung des Arretierelements 31. Auf die Überführung des Arretierelements 31 von der Fixierstellung in die Lösestellung wird in Figur 5, Figur 7, Figur 8 später näher eingegangen.

Wie vorstehend beschrieben, weist die Spanneinrichtung 20 eine Nocke 23 auf. Die Nocke 23 ist mit der Spannwelle 22 gemäß Figur 2 drehfest verbunden. Zur Anhebung des Arretierelements 31 wirkt die Nocke 23 mit dem Arretierelement 31 kraftübertragend zusammen. Auf die Nocke 23 wird später näher eingegangen.

Gemäß Figur 3 und Figur 4 weist das Eingriffselement 33 ein Verbindungsteil 71 auf. Das Verbindungsteil 71 bildet ein separates Teil, das durch eine Koppelvorrichtung 60 mit dem Eingriffselement 33 verbunden ist. Die Betätigung der Koppelvorrichtung 60 ermöglicht ein Lösen der mechanischen Verbindung zwischen dem Eingriffselement 33 und dem Verbindungsteil 71. Dabei ist das Verbindungsteil 71 vom Eingriffselement 33 getrennt, wobei das Verbindungsteil 71 und das Eingriffselement 33 in Längsrichtung L unabhängig voneinander bewegbar sind.

Die Koppelvorrichtung 60 umfasst ein stiftförmiges Koppelelement 61. Das stiftförmige Koppelelement 61 ist an einem pyroelektrischen Aktuator 62 angebracht. Bei Betätigung des Aktuators 62 wird eine pyrotechnische Treibladung gezündet, durch die das Koppelelement 61 in Richtung des Aktuators 62 bewegt wird.

Der Aktuator 62 ist am Eingriffselement 33 befestigt. Das Koppelelement 61 erstreckt sich dabei quer zur Längsachse L durch eine Formschlussöffnung 75 des Eingriffselements 33 und durch eine weitere Formschlussöffnung 72 des Verbindungsteils 71. Die Formschlussöffnungen 72, 75 sind koaxial zueinander angeordnet. Greift das Koppelelement 61 in die Formschlussöffnung 72, 75 ein, sind das Verbindungsteil 71 und das Eingriffselement 33 formschlüssig miteinander verbunden. Dadurch werden bei einer Krafteinleitung über das Arretierelement 31 in einer Crash-Situation des Kraftfahrzeugs das Eingriffselement 33 und das Verbindungsteil 71 gemeinsam in Richtung der Längsachse L bewegt.

Wird die Koppelvorrichtung 60 gezündet, bewegt der Aktuator 62 das Koppelelement 61 aus der Formschlussöffnung 72 heraus, so dass ein entkoppelter Zustand eingenommen wird. Im entkoppelten Zustand ist das Eingriffselement 33 vom Verbindungsteil 71 mechanisch getrennt. Ferner wird im entkoppelten Zustand bei einer Krafteinleitung über das Arretierelement 31 in einer Crash-Situation des Kraftfahrzeugs nur das Eingriffselement 33 relativ zum Mantelrohr 51 in der Längsrichtung mitgenommen. Das Verbindungsteil 71 bleibt gegenüber dem Mantelrohr 51 in einer Ruheposition.

Das Verbindungsteil 71 weist ein erstes Positionierelement 73 in Form einer in Längsrichtung offenen Nut auf. In die Nut ist ein an dem Eingriffselement 33 ausgebildetes zweites Positionierelement 79 in Form eines passenden Vorsprungs einsetzbar. Dadurch sind das Eingriffselement 33 und das Verbindungsteil 71 quer zur Längsrichtung formschlüssig relativ zueinander positioniert.

Das Eingriffselement 33 weist eine Befestigungsöffnung 76 auf, durch die ein Sollbruchelement in Form eines Scherbolzens 78 hindurchgeführt ist. Der Scherbolzen 78 ist fest mit dem Mantelrohr 51 verbunden. Ferner wird das Eingriffselement 33 durch den Scherbolzen 78 an der Einergieabsorptionseinrichtung 80 gehalten.

Die Energieabsorptionseinrichtung 80 ist an dem Mantelrohr 51 angeordnet. Die Energieabsorptionseinrichtung 80 weist ein Gehäuse in Form eines Halteprofils 81 auf. Das Halteprofil 81 ist C-förmig ausgebildet. Das Halteprofil 81 kann durch eine C-förmige Schiene gebildet sein. Das Halteprofil 81 ist fest mit dem Mantelrohr 51 verbunden. Des Weiteren erstreckt sich das Halteprofil 81 in Längsrichtung des Mantelrohrs 51, wobei der offene Querschnitt des Halteprofils 81 gegen eine Außenseite des Mantelrohrs 51 gerichtet ist. Das Halteprofil 81 ist durch Formschlusselemente 81a mit dem Mantelrohr 51 fest verbunden. Die Formschlusselemente 81a greifen zur formschlüssigen Verbindung des Halteprofils 81 in korrespondierende Aufnahmeöffnungen 51a des Mantelrohrs 51 ein. Das Halteprofil 81 kann mit dem Mantelrohr 51 durch Schweißen, insbesondere Laserschweißen verbunden sein. Das Halteprofil 81 weist auf einer nach außen gerichteten Außenseite einen Schlitz 82 auf. Der Schlitz 82 erstreckt sich dabei parallel zur Längsachse L des Mantelrohres 51.

Im Halteprofil 81 ist ein ebenfalls C-förmiges Innenprofil 63 angeordnet. Das Innenprofil 63 erstreckt sich in Richtung der Längsachse L und ist nach außen zum Halteprofil 81 hin offen ausgebildet. Das Innenprofil 63 kann fest mit dem Mantelrohr 51 verbunden sein. Das Innenprofil 63 kann dabei durch ein Verschweißen mit dem Mantelrohr 51 verbunden sein. Ferner kann das Innenprofil 63 durch ein Federstahlblech gebildet sein.

Wie in Figur 4 gezeigt, sind Energieabsorptionselemente 64, 66 im Innenprofil 63 beabstandet zueinander angeordnet. Die Energieabsorptionselemente 64, 66 sind hierbei jeweils als U-förmiger Biegedraht, insbesondere Biegestreifen ausgestaltet. Das jeweilige Energieabsorptionselement 64, 66 ist mit einem ersten Schenkel über eine Umbiegung von 180° mit einem zweiten Schenkel verbunden. Am Ende des zweiten Schenkels ist jeweils ein Mitnehmerhaken 64b, 66b durch eine Umbiegung gegen den ersten Schenkel ausgebildet. Die Energieabsorptionselemente 64, 66 können als Stanzteile ausgebildet sein.

Wie in Figur 4 gut erkennbar, weisen das Eingriffselement 33 ein erstes Mitnehmerelement 77 und das Verbindungsteil 71 ein zweites Mitnehmerelement 74 auf. Das Eingriffselement 33 und das Verbindungsteil 71 sind am Halteprofil 81 angeordnet. Das Eingriffselement 33 und das Verbindungsteil 71 sind am Halteprofil 81 derart angeordnet, dass die Mitnehmerelemente 74, 77 durch den Schlitz 81 hindurch in die Eingriffsöffnungen 64a, 66a der Energieabsorptionselemente 64, 66 eingreifen. Dadurch kann das Eingriffselement 33 in Längsrichtung parallel zur Längsachse L in dem Schlitz 82 des Halteprofils 81 geführt mit dem ersten Mitnehmerelement 77 hinter den Mitnehmerhaken 66b des Energieabsorptionselements 66 eingreifen. Das Eingriffselement 33 kann in einer Crash-Situation das Energieabsorptionselement 66 dadurch verbiegen bzw. plastisch verformen. Entsprechend kann das Verbindungsteil 71 in Längsrichtung parallel zur Längsachse L in dem Schlitz 82 des Halteprofils 81 geführt mit dem zweiten Mitnehmerelement 74 hinter den Mitnehmerhaken 64b des Energieabsorptionselements 64 eingreifen. Hierbei kann das Verbindungsteil 71 in einer Crash-Situation das Energieabsorptionselement 64 verbiegen, insbesondere plastisch verformen. Weiterhin kann es zusätzlich vorgesehen sein, dass der Schlitz 82 durch das Mitnehmerelement 77 des Eingriffselement 33 in der Crash-Situation durch die Verlagerung des Eingriffselements 33 relativ zum Halteprofil 81 aufgeweitet wird, also plastisch deformiert wird und somit ebenfalls Energie zu absorbieren.

Figur 5 zeigt die Stelleinheit 11, die Energieabsorptionseinrichtung 80, eine Feststelleinrichtung 30 und eine Koppelvorrichtung 60. Wie vorstehend beschrieben, weist die Feststelleinrichtung 30 ein Arretierelement 31 auf, das in der Halteeinheit 12 gemäß Figur 1 und Figur 2 angeordnet ist. Des Weiteren umfasst die Feststelleinrichtung 30, wie vorstehend beschrieben, das Eingriffselement 33, das unter Zwischenschaltung der Energieabsorptionseinrichtung 80 mit der Stelleinheit 11 verbunden ist.

In Figur 5 ist ersichtlich, dass ein Federelement 35 an der Halteeinheit 12 vorgesehen ist. Das Federelement 35 kann dabei an der Halteeinheit 12 derart vorgesehen sein, dass das Federelement 35 kraftschlüssig und/oder formschlüssig mit der Halteeinheit 12 verbunden ist. Das Federelement 35 kann durch eine Federzunge gebildet sein. Ferner kann das Federelement 35 auch durch einen Federstab gebildet sein. Ebenso ist denkbar, dass das Federelement 35 durch eine Blattfeder gebildet ist. Des Weiteren ist möglich, dass das Federelement 35 durch eine Spiralfeder oder eine Tellerfeder gebildet ist.

Das Federelement 35 gemäß Figur 5 weist eine längliche Bauform auf und ist aus Federstahl gebildet. Das Federelement 35 ist an einer Einspannposition an der Halteeinheit 12 abgewinkelt ausgebildet. Ferner steht das Federelement 35 mit einem freien Ende mit dem Arretierelement 31 in Kontakt. Das Federelement 35 weist im Kontaktbereich mit dem Arretierelement 31 eine gebogene Bauform auf. Dabei ist das freie Ende des Federelements 35 gebogen ausgeführt. Das freie Ende des Federelements 35 weist eine Materialbiegung auf.

Das Arretierelement 31 ist in der Halteeinheit 12 in einer Richtung quer zur Längsachse L höhenverschiebbar, insbesondere anhebbar angeordnet. Das Arretierelement 31 ist dabei in der Halteeinheit 12 derart angeordnet, dass das Arretierelement 31 in einer Höhenrichtung H geführt ist. Das Arretierelement 31 ist in der Halteeinheit 12 derart angeordnet, dass das Arretierelement 31 in Richtung der Längsachse L verschiebefest ist.

Das Arretierelement 31 weist im Wesentlichen einen im Querschnitt rechteckigen Grundkörper auf. Der rechteckige Grundkörper des Arretierelements 31 weist in einem Eingriffsbereich erste Formschlussmittel 31a auf. Die ersten Formschlussmittel 31a sind hierbei durch eine Verzahnung gebildet. Die Verzahnung kann durch eine Sägezahn-Verzahnung gebildet sein. Das Arretierelement 31 weist ferner einen vom Grundkörper des Arretierelements 31 abstehend ausgebildeten Arretierhebel 36 auf. Der Arretierhebel 36 ist am Arretierelement 31 derart ausgebildet, dass sich der Arretierhebel 36 vom Grundkörper des Arretierelements 31 in Richtung der Längsachse L erstreckt. Der Arretierhebel 36 ist hakenförmig ausgebildet. Der Arretierhebel 36 kann federnde Eigenschaften aufweisen. Der Arretierhebel 36 kann elastisch verformbar, insbesondere spannbar. Bevorzugt ist der Arretierhebel 36 steif ausgebildet. Der Arretierhebel 36 weist ein freies Ende auf, an dem eine Kulissenbahn 32 ausgebildet ist. Auf die Kulissenbahn 32 wird in Figur 6 später näher eingegangen.

Das Eingriffselement 33 weist eine längliche Bauform auf. Des Weiteren umfasst das Eingriffselement 33 eine rechteckige Querschnittsform. Das Eingriffselement 33 weist auf einer dem Arretierelement 31 zugewandten Seite zweite Formschlussmittel 33a auf. Die zweiten Formschlussmittel 33a sind dabei durch eine Verzahnung gebildet. Die Verzahnung der zweiten Formschlussmittel 33a ist dabei zu den ersten Formschlussmitteln 31a des Arretierelements 31 komplementär ausgebildet. Das Arretierelement 31 ist daher durch die ersten Formschlussmittel 31a mit den zweiten Formschlussmitteln 33a des Eingriffselements 33 in Eingriff bringbar. Das Arretierelement 31 ist somit dem Eingriffselement 33 formschlüssig verbindbar.

Wie vorstehend beschrieben, steht das Federelement 35 mit einem freien Ende mit dem Arretierelement 31 in Kontakt. Das Federelement 35 presst dabei das Arretierelement 31 gegen das Eingriffselement 33. Das Arretierelement 31 ist somit mit dem Eingriffselement 33 kraftschlüssig und formschlüssig lösbar verbindbar. Das Federelement 35 greift zur Vorspannung des Arretierelements 31 gegen das Eingriffselement 33 an einer Materialstufe des Arretierelements 31 an.

Gemäß Figur 5 ist das Arretierelement 31 in der Fixierstellung gezeigt. Das Arretierelement 31 ist hierbei mit dem Eingriffselement 33 kraft- und formschlüssig verbunden. Der Spannhebel 21 befindet sich in einer Feststellposition, in der keine Längenverstellung der Lenksäule zur Positionierung des Lenkrades möglich ist. Die Fixierstellung des Arretierelements 31 stellt den Normalbetrieb dar.

Figur 6 zeigt eine Detailansicht der Spanneinrichtung 20, die mit der Feststelleinrichtung 30 zusammenwirkt. Wie vorstehend beschrieben, weist das Arretierelement 31 einen Arretierhebel 36 mit einer Kulissenbahn 32 auf. Die Kulissenbahn 32 umfasst einen ersten Rampenbereich 42, einen zweiten Rampenbereich 43 und einen dazwischenliegenden Übergangsbereich 41. Der erste Rampenbereich 42 und der zweite Rampenbereich sind vom dazwischenliegenden Übergangsbereich 41 ausgehend geometrisch ansteigend ausgebildet. Die Kulissenbahn 32 ist durch den ersten Rampenbereich 42 und den zweiten Rampenbereich V-förmig ausgebildet.

Der erste Rampenbereich 42 ist durch eine erste ansteigende Rampe 42a gebildet. Der zweite Rampenbereich 43 ist durch eine abfallende Rampe 43a gebildet. Die Kulissenbahn 32 ist somit durch die erste ansteigende Rampe 42a und die abfallende Rampe 43a V-förmig ausgebildet. Die Steigung der ansteigenden Rampe 42a ist der Steigung der abfallenden Rampe 43a entgegengesetzt, so dass der Wert der Steigung der ansteigenden Rampe 42a ein entgegengesetztes Vorzeichen aufweist als der Wert der Steigung der abfallenden Rampe 43a, sprich der Wert der einen Steigung ist Positiv und der Wert der anderen Steigung ist negativ. Die Begriffe "abfallend" und "ansteigend" sind also so zu verstehen, dass die Rampen Steigungen mit unterschiedlichen Vorzeichen aufweisen, somit könnten diese Begriffe auch gegeneinander vertauscht werden, ohne die erfindungsgemäße Lösung zu verändern.

Die ansteigende Rampe 42a wird als ansteigende Rampe bezeichnet, da dank dieser Rampe 42a das Arretierelement 31 in Zusammenwirken mit der Nocke 23 angehoben wird. Aus geometrischer Sicht ist die ansteigende Rampe 42a vom Übergangsbereich 41 ausgehend ebenso ansteigend ausgebildet.Die abfallende Rampe 43a wird als abfallende Rampe bezeichnet, da dank dieser Rampe 43a das Arretierelement 31 in Zusammenwirken mit der Nocke 23 abgesenkt wird. Hierbei ist aus geometrischer Sicht die abfallende Rampe 43a vom Übergangsbereich 41 ausgehend geometrisch ansteigend ausgebildet.

Der Übergangsbereich 41 weist eine Stelle auf, in der die Steigung den Wert Null einnimmt und bildet somit einen Extrempunkt oder Scheitelpunkt, in dem sich die Bewegungsrichtung des Arretierelements umkehrt und somit einen Totpunkt bzgl. der Bewegung des Arretierelements 31 bildet. Die Werte der Steigung einer beispielsweise gewölbten Rampe lässt sich durch eine an einer jeweiligen Stelle der Rampe angelegte Tangente und der Ermittlung der Steigung der Tangente bestimmen oder durch eine mathematische Differenzierung einer Gleichung die die Kulissenbahn der Rampe bestimmt, wie dies dem Fachmann aus dem mathematischen Teilgebiet der Analysis bekannt ist.

Die erste ansteigende Rampe 42a ist vom Übergangsbereich 41 ausgehend in Richtung des Grundkörpers des Arretierelements 31 ausgebildet. Ferner ist die abfallende Rampe 43a vom Übergangsbereich 41 ausgehend in Richtung des freien Endes des Arretierhebels 36 ausgebildet. Die Rampen 42a, 43a sind daher vom Übergangsbereich 41 in entgegengesetzter Richtung am Arretierhebel 36 ausgebildet und weisen somit Steigungen mit unterschiedlichen Vorzeichen auf. Die erste ansteigende Rampe 42a, die abfallende Rampe 43a und der Übergangsbereich 41 bilden eine Arretiernase.

Die Nocke 23 der Spanneinrichtung 20 ist in der Halteeinheit 12 derart angeordnet, dass die Nocke 23 mit einer Nockenkontur mit der Kulissenbahn 32 zusammenwirken kann. Die Nocke 23 ist drehfest mit der Spannwelle 22 verbunden. Die Spanneinrichtung 20 weist des Weiteren eine Spannhülse auf, die die Nocke 23 abschnittsweise umschließt.

Ferner weisen der erste Rampenbereich 42 und der zweite Rampenbereich 43 einen Winkel β zueinander auf, der kleiner als 150° ist. Der Winkel β kann hierbei zwischen 80° und 140° betragen. Mit anderen Worten weisen die erste ansteigende Rampe 42a und die abfallende Rampe 43a zueinander einen Winkel β auf, der kleiner als 150° ist. Dabei ist denkbar, dass die erste ansteigende Rampe 42a einen größeren Steigungswinkel aufweist als die abfallende Rampe 43a. Der Steigungswinkel wird hierbei von einer gedachten Referenzebene aus gemessen, die tangential am Übergangsbereich 41 horizontal anliegt. Die Referenzebene ist dabei parallel zur Längsachse L, die in Figur 5 ersichtlich ist, ausgerichtet.

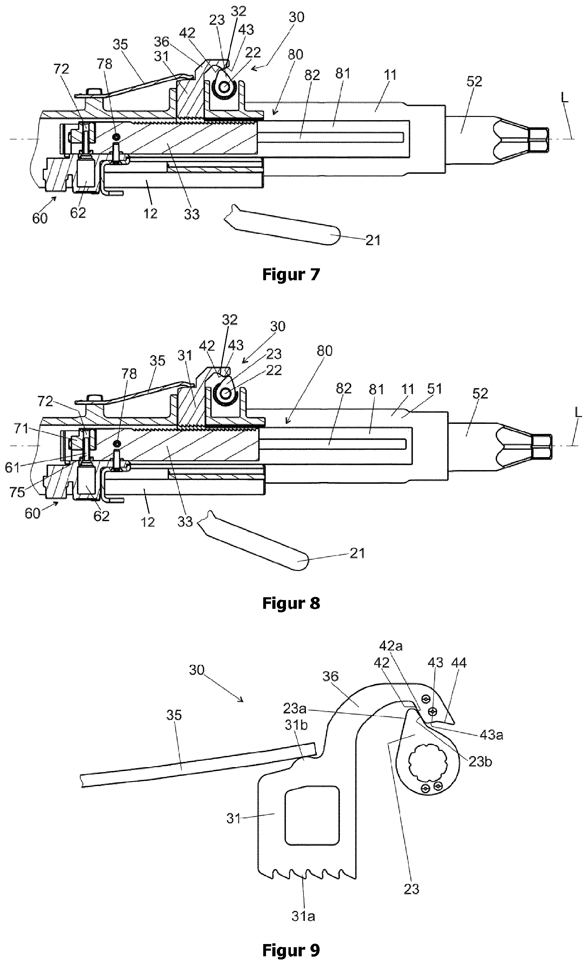

Figur 7 zeigt das Arretierelement 31 bei einer Überführung von der Fixierstellung in die Lösestellung. Die Nocke 23 der Spanneinrichtung 20 ist derart gedreht, dass die Nocke 23 mit einer Nockenspitze mit dem Übergangsbereich 41 der Kulissenbahn 32 des Arretierelements 31 zusammenwirkt. Der Spannhebel 21 befindet sich hierbei in einer Zwischenposition. Wie in Figur 7 gut erkennbar, ist das Arretierelement 31 vom Eingriffselement 33 entkoppelt. Die Nocke 23 wirkt dabei mit der Kulissenbahn 32 des Arretierelements 31 derart zusammen, dass das Arretierelement 31 in einer Richtung quer zur Längsachse L angehoben, insbesondere gelöst ist. Das Arretierelement 31 ist in diesem Fall mit dem ersten Formschlussmittel 31a vom zweiten Formschlussmittel 33a des Eingriffselements 31 formschlussentkoppelt. In der Figur 7 befindet sich das Arretierelement 31 im Totpunkt, es ist somit am weitmöglichsten angehoben und am weitmöglichsten von dem Eingriffselement 33 entfernt.

Durch die Hubbewegung des Arretierelements 31 vom Eingriffselement 33 ausgehend gegen das Federelement 35, wird die Vorspannkraft des Federelements 35 erhöht. Wird der Spannhebel 21 weitergedreht, so gleitet die Nocke 23 mit der Nockenspitze über den Übergangsbereich 41 in Richtung der abfallenden Rampe 43a des zweiten Rampenbereichs 43, so dass sich das Arretierelement 31 wieder auf das Eingriffselement 33 zubewegt, also in diesem Fall wieder nach unten absenkt. Durch die erhöhte Federkraft aufgrund der Hubbewegung des Arretierelements 31 wird die Nocke 23 durch die Federkraft in die Lösestellung des Arretierelements 31 federkraftunterstützt gedreht. Die Lösestellung des Arretierelements 31 sowie die Freigabeposition des Spannhebels 21 sind in Figur 8 gezeigt.

Die Federkraft des Federelements 35 wirkt beim Übergang der Nocke 23 vom Übergangsbereich 41 in den zweiten Rampenbereich 43 kraftunterstützend. Die Nocke 23 ist in der Lösestellung des Arretierelements 31 durch die abfallende Rampe 43a des zweiten Rampenbereichs 43 positionsfest gehalten.

In der Lösestellung ist das Arretierelement 31 vom Eingriffselement 33 kraftentkoppelt, mit anderen Worten stehen diese nicht in Eingriff. In der Lösestellung ist das Arretierelement 31 vom Eingriffselement 33 kraftentkoppelt bzw. mechanisch getrennt. Der Spannhebel 21 befindet sich in der Lösestellung in der Freigabeposition zur Längenverstellung der Lenksäule 10.

Figur 9 zeigt das Arretierelement 31, die Nocke 23 und das Federelement 35 nach einem weiteren erfindungsgemäßen Ausführungsbeispiel. Im Unterschied zum Arretierelement 31, wie in Figur 5 und Figur 6 beschrieben, weist das Arretierelement 31 gemäß Figur 9 eine Durchgangsöffnung im Grundkörper des Arretierelements 31 auf. Die Durchgangsöffnung ist dabei im Wesentlichen rechteckförmig ausgebildet. Dies hat den Vorteil, dass Material und Masse eingespart werden. Des Weiteren ist vorteilhaft, dass ein zusätzlicher Bauraum geschaffen ist, in dem weitere Befestigungselemente oder Funktionselemente angeordnet sein können.

Des Weiteren weist das Arretierelement 31 einen Materialvorsprung 31b auf, an dem das Federelement 35 angreift. Der Materialvorsprung 31b ist dabei auf der Materialstufe des Grundkörpers des Arretierelements 31 angeordnet. Der Materialvorsprung 31b kann auch an einer anderen nicht genannten Position am Arretierelement 31 ausgebildet sein.

Das Federelement 35 gemäß Figur 9 ist im Gegensatz zum Federelement 35 gemäß Figur 5 und Figur 6 geradlinig ausgebildet. Mit anderen Worten weist das Federelement 35 gemäß Figur 9 am freien Ende keine gebogene Form auf. Der Materialvorsprung 31b kann am Arretierelement 31 derart ausgebildet sein, dass das Federelement in Punktkontakt mit dem Arretierelement 31 steht. Ferner kann der Materialvorsprung 31b am Arretierelement 31 derart ausgebildet sein, dass das Federelement 35 in Linienkontakt mit dem Arretierelement 31 steht. Der Materialvorsprung 31b kann dabei eine linienförmige Auflagefläche aufweisen. Der Materialvorsprung 31b kann auch einen Auflagepunkt aufweisen. Der Materialvorsprung 31b ist am Arretierelement 31 derart ausgebildet, so dass eine verbesserte Federkrafteinleitung vom Federelement 35 auf das Arretierelement 31 erreicht ist.

Ferner weist das Arretierelement 31 gemäß Figur 9 im Unterschied zum Arretierelement 31 gemäß den Figur 5 und 6 einen zweiten Rampenbereich 43 auf, der eine zweite ansteigende Rampe 44 aufweist. Die zweite ansteigende Rampe 44 ist ebenso am freien Ende des Arretierhebels 36 des Arretierelements 31 ausgebildet. Die zweite ansteigende Rampe 44 bildet mit der abfallende Rampe 43a am freien Ende des Arretierhebels 36 eine Materialeinwölbung. Die Materialeinwölbung kann derart ausgebildet sein, dass das freie Ende des Arretierhebels 36 eine wannenförmige Einbuchtung aufweist. Wird die Nocke 23 in die Lösestellung des Arretierelements 31 gedreht, so ist die Nocke 23 mit der Nockenspitze in der Einwölbung des freien Endes des Arretierhebels 36 positionsfest gehalten.

Die Nocke 23 gemäß Figur 9 weist im Unterschied zur Nocke 23 gemäß den Figuren 5 bis 8 eine erste Nockenkontur 23a und eine zweite Nockenkontur 23b auf. Die zweite Nockenkontur 23b der Nocke 23 wirkt mit dem ersten Rampenbereich 42 zum sicheren Entkoppeln des Arretierelements 31 vom Eingriffselement 33 zusammen. Die zweite Nockenkontur 23b der Nocke 23 ist durch eine Materialeinschnürung der Nocke 23 gebildet. Die Materialeinschnürung ist derart ausgebildet, dass die Nocke 23 asymmetrisch ausgebildet ist. Die Nocke 23 kann auch eine symmetrische Nockenform, wie in den Figuren 5 bis 8 gezeigt, aufweisen. Die zweite Nockenkontur 23b der Nocke 23 kann derart ausgebildet sein, dass bei einem Zusammenwirken der Nocke 23 mit der Kulissenbahn 32 die zweite Nockenkontur 23b mit der ersten ansteigenden Rampe 42a in Flächenkontakt steht. Es ist auch denkbar, dass die zweite Nockenkontur 23b der Nocke 23 derart ausgebildet ist, dass die Nockenkontur 23b bei einem Zusammenwirken mit der ersten ansteigenden Rampe 42a in einem Linienkontakt und/oder Punktkontakt steht. Wird daher die Nocke 23 mit der zweiten Nockenkontur 23b zur Überführung des Arretierelements 31 in die Lösestellung gedreht, gleitet die zweite Nockenkontur 23b auf der Kulissenbahn 32 ab. Die Nocke 23 ist mit der zweiten Nockenkontur 23b dem freien Ende des Arretierhebels 36 zugewandt an der Spanneinrichtung 20 angeordnet. Dabei greift die zweite Nockenkontur 23b an dem ersten Rampenbereich 42 an und wird über den Übergangsbereich 41 in Richtung des zweiten Rampenbereichs 43 bewegt.

In der Stellung, bei der die Nockenspitze der Nocke 23 mit dem Übergangsbereich 41 in Kontakt steht, wirkt die Federkraft unterstützend beim Öffnen des Spannhebels 21. Mit anderen Worten wird das Betätigen das Spannhebels 21 durch die Federkraft und die abfallende Rampe 43a unterstützt. Beim Überführen des Arretierelements 31 von der Fixierstellung in die Lösestellung hat der Fahrzeuginsasse das Gefühl, dass der Spannhebel 21 in die Öffnungsstellung bzw. die Lösestellung durch die Federkraft gezogen wird. Ferner hat der Fahrzeuginsasse beim Schließen des Spannhebels 21 bzw. beim Überführen des Arretierelements 31 von der Lösestellung in die Fixierstellung das Gefühl, dass durch die erste Nockenkontur 23a nur eine geringe Betätigungskraft erforderlich ist. Somit wird eine verbesserte Handhabung des Öffnens und Schließens des Spannhebels 21 erreicht. Eine einfache und schnelle Verstellung mit verbesserter Handhabung des Spannhebels 21 wird somit erreicht.

### Bezugszeichenliste

- 10: Lenksäule
- 11: Stelleinheit
- 12: Halteeinheit
- 20: Spanneinrichtung
- 21: Spannhebel
- 22: Spannwelle
- 23: Nocke
- 23a: erste Nockenkontur
- 23b: zweite Nockenkontur
- 24: Kippstiftanordnung
- 25: Stützscheibe
- 30: Feststelleinrichtung
- 31: Arretierelement
- 31a: erstes Formschlussmittel
- 31b: Materialvorsprung
- 32: Kulissenbahn
- 33: Eingriffselement
- 33a: zweites Formschlussmittel
- 34: Federelement
- 35: weiteres Federelement
- 36: Arretierhebel
- 41: Übergangsbereich
- 42: erster Rampenbereich
- 42a: erste ansteigende Rampe
- 43: zweiter Rampenbereich
- 43a: abfallende Rampe
- 44: zweite ansteigende Rampe
- 51: Mantelrohr
- 51a: Aufnahmeöffnung
- 52: Lenkspindel
- 53: Ende der Lenkspindel
- 54: Halteelement
- 54a: Befestigungsmittel
- 55, 56: Seitenwangen
- 57: Langloch
- 58: Öffnung
- 60: Koppelvorrichtung
- 61: Koppelelement
- 62: pyroelektrischer Aktuator
- 63: Innenprofil
- 64, 66: Energieabsorptionselement
- 64a, 66a: Eingriffsöffnung
- 64b, 66b: Mitnehmerhaken
- 71: Verbindungsteil
- 72: Formschlussöffnung
- 73: erstes Positionierelement
- 79: zweites Positionierelement
- 74: zweites Mitnehmerelement
- 77: erstes Mitnehmerelement
- 75: Formschlussöffnung
- 76: Befestigungsöffnung
- 78: Scherbolzen
- 80: Energieabsorptionseinrichtung
- 81: Halteprofil
- 81a: Formschlusselement
- 82: Schlitz
- L: Längsachse
- H: Höhenrichtung

## Patentansprüche

1. Lenksäule (10) für ein Kraftfahrzeug, umfassend
- eine Stelleinheit (11) mit wenigstens einem Mantelrohr (51), in dem eine Lenkspindel (52) um eine Längsachse (L) des Mantelrohrs (51) drehbar gelagert ist;
- eine Halteeinheit (12), die mit der Karosserie des Kraftfahrzeugs verbindbar ist und in der die Stelleinheit (11) verschiebbar angeordnet ist;
- wenigstens eine Spanneinrichtung (20), durch die die Stelleinheit (11) gegenüber der Halteeinheit (12) festsetzbar ist, wobei die Spanneinrichtung (20) wenigstens einen Spannhebel (21) und wenigstens eine Spannwelle (22) umfasst, die drehfest miteinander gekoppelt sind, und die Spannwelle (22) wenigstens eine Nocke (23) aufweist, die drehfest mit der Spannwelle (22) verbunden ist;
- wenigstens eine Feststelleinrichtung (30), die wenigstens ein Arretierelement (31), das in der Halteeinheit (12) angeordnet ist, und wenigstens ein Eingriffselement (33) umfasst, das mit der Stelleinheit (11) verbunden ist, wobei die Nocke (23) mit einer Kulissenbahn (32) des Arretierelements (31) derart korrespondiert, dass durch eine Drehbewegung der Nocke (23) das Arretierelement (31) mit dem Eingriffselement (33) in Eingriff bringbar ist,
wobei die Kulissenbahn (32) einen ersten Rampenbereich (42), einen zweiten Rampenbereich (43) und einen dazwischenliegenden Übergangsbereich (41) aufweist, von dem ausgehend die Rampenbereiche (42, 43) ausgebildet sind, wobei der erste Rampenbereich (42) als ansteigende Rampe (42a) ausgebildet ist und der zweite Rampenbereich (43) eine abfallende Rampe (43a) umfasst
**dadurch gekennzeichnet,**
**dass** das Arretierelement (31) in der Halteeinheit (12) derart angeordnet ist, dass es in einer Höhenrichtung (H) verschiebbar angeordnet ist, und in Richtung der Längsachse (L) verschiebefest ist.

2. Lenksäule nach Anspruch 1,
**dadurch gekennzeichnet, dass**
die ansteigende Rampe (42a) und die abfallende Rampe (43a) einen Winkel (β) zueinander aufweisen, der kleiner als 150° ist.

3. Lenksäule nach Anspruch 1 oder 2,
**dadurch gekennzeichnet, dass**
der zweite Rampenbereich (43) eine zweite ansteigende Rampe (44) aufweist.

4. Lenksäule nach einem der vorhergehenden Ansprüche,
**dadurch gekennzeichnet, dass**
ein Federelement (35) vorgesehen ist, das das Arretierelement (31) vorspannt.

5. Lenksäule nach Anspruch 4,
**dadurch gekennzeichnet, dass**
das Arretierelement (31) einen Materialvorsprung (31b) aufweist, an dem das Federelement (35) angreift.

6. Lenksäule nach Anspruch 5,
**dadurch gekennzeichnet, dass**
der Materialvorsprung (31b) derart ausgebildet ist, dass das Federelement (35) in Punktkontakt und/oder in Linienkontakt mit dem Arretierelement (31) steht.

7. Lenksäule nach einem der vorhergehenden Ansprüche,
**dadurch gekennzeichnet, dass**
das Arretierelement (31) wenigstens ein erstes Formschlussmittel (31a) und das Eingriffselement (33) wenigstens ein zweites Formschlussmittel (33a) aufweist, wobei die Formschlussmittel (31a, 33a) durch eine Hubbewegung des Arretierelements (31) in gegenseitigen Eingriff bringbar sind.

8. Lenksäule nach einem der vorhergehenden Ansprüche,
**dadurch gekennzeichnet, dass**
das Arretierelement (31) mit dem Eingriffselement (33) kraftschlüssig und formschlüssig lösbar verbindbar ist.

9. Lenksäule nach einem der vorhergehenden Ansprüche,
**dadurch gekennzeichnet, dass**
die Nocke (23) eine erste Nockenkontur (23a) und eine zweite Nockenkontur (23b) aufweist, die mit dem ersten Rampenbereich (42) zum sicheren Entkoppeln des Arretierelements (31) vom Eingriffselement (33) zusammenwirkt.

10. Lenksäule nach einem der vorhergehenden Ansprüche,
**dadurch gekennzeichnet, dass**
das Eingriffselement (33) unter Zwischenschaltung einer Energieabsorptionseinrichtung (80) mit der Stelleinheit (11) verbunden ist.

## Claims

1. Steering column (10) for a motor vehicle, comprising
- an actuator unit (11) with at least one jacket tube (51), in which a steering spindle (52) is mounted rotatably about a longitudinal axis (L) of the jacket tube (51);
- a holding unit (12) which can be connected to the body of the motor vehicle and in which the actuator unit (11) is displaceably arranged;
- at least one clamping device (20) by means of which the adjusting unit (11) can be fixed relative to the holding unit (12), the clamping device (20) comprising at least one clamping lever (21) and at least one clamping shaft (22) which are coupled to one another in a rotationally fixed manner, and the clamping shaft (22) having at least one cam (23) which is connected to the clamping shaft (22) in a rotationally fixed manner;
- at least one locking device (30), which comprises at least one locking element (31), which is arranged in the holding unit (12), and at least one engagement element (33), which is connected to the actuating unit (11), the cam (23) corresponding to a link path (32) of the locking element (31) in such a way that the locking element (31) can be brought into engagement with the engagement element (33) by a rotary movement of the cam (23),
wherein the link path (32) has a first ramp region (42), a second ramp region (43) and an intermediate transition region (41), from which the ramp regions (42, 43) start, from which the ramp regions (42, 43) are formed, wherein the first ramp region (42) is formed as an ascending ramp (42a) and the second ramp region (43) comprises a descending ramp (43a)
**characterized in**
**in that** the locking element (31) is arranged in the holding device (12) in such a way that it is arranged displaceably in a height direction (H) and is fixed in terms of displacement in the direction of the longitudinal axis (L).

2. Steering column according to claim 1,
**characterized in that** the rising ramp (42a) and the falling ramp (43a) have an angle (β ) to each other which is smaller than 150°.

3. Steering column according to claim 1 or 2,
**characterized in that** the second ramp region (43) has a second rising ramp (44).

4. Steering column according to any one of the preceding claims,
**characterized in that**
a spring element (35) is provided which biases the locking element (31).

5. Steering column according to claim 4,
**characterized in that**
the locking element (31) has a material projection (31b) on which the spring element (35) engages.

6. Steering column according to claim 5,
**characterized in that** the material projection (31b) is formed such that the spring element (35) is in point contact and/or in line contact with the locking element (31).

7. Steering column according to any one of the preceding claims,
**characterized in that**
the locking element (31) comprises at least one first positive locking means (31a) and the engagement element (33) comprises at least one second positive locking means (33a), wherein the positive locking means (31a, 33a) can be brought into mutual engagement by a lifting movement of the locking element (31).

8. Steering column according to one of the preceding claims,
**characterized in that**
the locking element (31) is releasably connectable to the engagement element (33) in a non-positive and a positive manner.

9. A steering column according to any one of the preceding claims,
**characterized in that**
the cam (23) has a first cam contour (23a) and a second cam contour (23b) that cooperates with the first ramp region (42) for securely decoupling the locking element (31) from the engagement element (33).

10. Steering column according to any one of the preceding claims,
**characterized in that**
the engagement element (33) is connected to the actuator (11) with the interposition of an energy absorption device (80).

## Revendications

1. Colonne de direction (10) pour un véhicule automobile, comprenant
- une unité d'actionnement (11) avec au moins un tube d'enveloppe (51), dans lequel un axe de direction (52) est monté rotatif autour d'un axe longitudinal (L) du tube d'enveloppe (51) ;
- une unité de maintien (12) qui peut être reliée à la carrosserie du véhicule à moteur et dans laquelle l'unité d'actionnement (11) est disposée de manière à pouvoir être déplacée ;
- au moins un dispositif de serrage (20) permettant de fixer l'unité de réglage (11) par rapport à l'unité de maintien (12), le dispositif de serrage (20) comprenant au moins un levier de serrage (21) et au moins un arbre de serrage (22) couplés l'un à l'autre de manière fixe en rotation, et l'arbre de serrage (22) comportant au moins une came (23) reliée à l'arbre de serrage (22) de manière fixe en rotation ;
- au moins un dispositif de verrouillage (30), qui comprend au moins un élément de verrouillage (31), qui est disposé dans l'unité de maintien (12), et au moins un élément d'engagement (33), qui est relié à l'unité d'actionnement (11), la came (23) correspondant à un chemin de liaison (32) de l'élément de verrouillage (31) de manière à ce que l'élément de verrouillage (31) puisse être mis en prise avec l'élément d'engagement (33) par un mouvement de rotation de la came (23),
dans lequel le chemin de liaison (32) comporte une première zone de rampe (42), une deuxième zone de rampe (43) et une zone de transition intermédiaire (41), à partir de laquelle les zones de rampe (42, 43) commencent, à partir de laquelle les zones de rampe (42, 43) sont formées, dans lequel la première zone de rampe (42) est formée comme une rampe ascendante (42a) et la deuxième zone de rampe (43) comprend une rampe descendante (43a)
**caractérisé par le fait**
**que** l'élément de verrouillage (31) est disposé dans le dispositif de maintien (12) de manière à pouvoir être déplacé dans le sens de la hauteur (H) et à être fixe en termes de déplacement dans le sens de l'axe longitudinal (L).

2. Colonne de direction selon la revendication 1,
**caractérisée par le fait que** la rampe montante (42a) et la rampe descendante (43a) présentent l'une par rapport à l'autre un angle (β ) inférieur à 150°.

3. Colonne de direction selon la revendication 1 ou 2,
**caractérisée par le fait que** la deuxième zone de rampe (43) comporte une deuxième rampe ascendante (44).

4. Colonne de direction selon l'une quelconque des revendications précédentes,
**caractérisée par le fait que**
un élément à ressort (35) est prévu pour solliciter l'élément de verrouillage (31).

5. Colonne de direction selon la revendication 4,
**caractérisée par le fait que**
l'élément de verrouillage (31) présente une saillie matérielle (31b) sur laquelle s'engage l'élément ressort (35).

6. Colonne de direction selon la revendication 5,
**caractérisée par le fait que** la saillie matérielle (31b) est formée de manière à ce que l'élément élastique (35) soit en contact ponctuel et/ou linéaire avec l'élément de verrouillage (31).

7. Colonne de direction selon l'une quelconque des revendications précédentes,
**caractérisée par le fait que**
l'élément de verrouillage (31) comprend au moins un premier moyen de verrouillage positif (31a) et que l'élément d'engagement (33) comprend au moins un deuxième moyen de verrouillage positif (33a), les moyens de verrouillage positif (31a, 33a) pouvant être mis en prise mutuelle par un mouvement de levage de l'élément de verrouillage (31).

8. Colonne de direction selon l'une des revendications précédentes,
**caractérisée par le fait que** l'
élément de verrouillage (31) peut être relié de manière amovible à l'élément d'engagement (33) de manière positive et non positive.

9. Colonne de direction selon l'une quelconque des revendications précédentes,
**caractérisée par le fait que**
la came (23) présente un premier contour de came (23a) et un second contour de came (23b) qui coopère avec la première région de rampe (42) pour découpler en toute sécurité l'élément de verrouillage (31) de l'élément d'engagement (33).

10. Colonne de direction selon l'une quelconque des revendications précédentes,
**caractérisée par le fait que**
l'élément d'engagement (33) est relié à l'actionneur (11) par l'interposition d'un dispositif d'absorption d'énergie (80).
